# EUROPEAN PATENT SPECIFICATION

(11) **EP 2 226 671 B1**
(45) Date of publication and mention of the grant of the patent: **13.02.2013**
(21) Application number: 09154226.6
(22) Date of filing: 03.03.2009
(51) Int. Cl.: G02B 21/34, B41M 5/26, B01L 3/00

(54) **Microscope slide with diode-laser markable region**
Objektivträger mit von einem Diodenlaser markierbarer Region
Préparation microscopique avec région pouvant être marquée par diode laser

(43) Date of publication of application: 08.09.2010
(73) Proprietor: Switch bvba, 9890 Gavere (BE)
(72) Inventor: Magniette, Olivier, 9831 DEURLE (BE)
(74) Representative: Brants, Johan P.E.

(56) References cited:
- EP-A- 1 800 885
- WO-A-2008/024496
- US-A- 5 919 553
- US-A1- 2008 194 016

## Description

### TECHNICAL FIELD

This invention relates to microscope slides, more particularly to those having at least one specifically-prepared portion providing a diode-laser markable region.

### BACKGROUND

In a hospital or laboratory environment, sample identification is of the utmost importance. Large numbers of samples, e.g. on a microscope slide carrier, need to be prepared, identified, processed and archived. This puts high demands on sample marking and processing. Sample marking needs to be easy, simple, durable and free of contamination. Sample processing is preferably automated, fast, environmentally friendly, and economic.

Microscope slides typically have an identification zone for marking purposes. Marking is typically based on either the addition or removal of material. However, etching a glass surface of a microscope is time consuming and induces stress on the material which may introduce cracks or breaks. Markings with ink from a pen or printer may not be resistant to solvents used in sample processing procedures.

Laser marking is becoming increasingly popular for the marking of samples. Laser marking produces permanent and solvent-resistant markings. Despite these advantages, however, laser marking of microscope slides is not without certain problems. In particular, the laser power that is required to achieve high contrast and durable markings is substantial. High powered lasers are expensive and/or bulky and difficult to install as part of a manufacturing line. Furthermore, the use of high powers on thin substrates may cause the substrate to be punctured. This is particularly problematic for microscope slides, where that substrate takes the form of a thin film or coating.

From EP 1 480 066 a coated microscope slide is known which can be marked by the removal of coating material from a first coating on top of a second coating, with different properties. Where material from the first coating is removed either by mechanical force or by laser irradiation, a second coating becomes visible thus providing contrast to the information marked on the microscope slide. The material removed may contaminate a sample as it is dislodged during the marking process or manipulation of a slide. Particularly, when marked slides are stacked, as in automated sample processing, sample contamination may be enhanced when using slides marked with a process based on material removal. The process requires the application of two coatings with different behaviour to laser irradiation. This may be tedious and time consuming.

Similar slides are known from WO 2008/024496 A2, US 5919553.

Lowering the energy delivered a thin substrate, particularly a coating layer on a microscope slide, hampers the marking process. Marking times required to obtain markings become unacceptable.

There remains a need in the art for improved laser-markable microscope slides, which overcome at least some of the above-mentioned problems.

### SUMMARY OF THE INVENTION

In accordance with the current invention, it was found that microscope slides provided with an electromagnetic radiation sensitive-coating, markable with a diode-laser, solve at least some of these problems.

In a first aspect, the invention relates to a microscope slide provided with an identification zone (1) comprising a markable region (2) with an electromagnetic radiation-sensitive coating that changes colour permanently on exposure to electromagnetic radiation of a diode-laser. High contrast, durable, scratch-resistant marks may be produced with cheap and small sized laser equipment. The microscope slides find application in automated sample processing. Capacity of sample production, marking and processing is increased.

The invention provides a microscope slide as described above wherein said coating has a thickness between 5-100 µm, preferably between 10-40 µm, preferably around 25 µm.

The invention provides a microscope slide as described above, wherein an electromagnetic radiation-marked area of the markable region (2) visually contrasts with the non-marked area of the markable region (2).

In a preferred embodiment the invention provides a microscope slide as described above wherein said identification zone (1) further comprises a visual tag (3).

In a preferred embodiment the invention provides a microscope slide as described above wherein the visual tag (3) is a colored or patterned area.

In a preferred embodiment the invention provides a microscope slide as described above wherein said visual tag (3) is adjacent to said markable region (2).

In a preferred embodiment the invention provides a microscope slide as described above wherein said visual tag (3) is disposed around the perimeter of said markable region (2).

In a preferred embodiment the invention provides a microscope slide as described above wherein said markable region (2) covers a surface which is at least 30% smaller than the surface area of the identification zone (1) on one side of said microscope slide.

In a preferred embodiment the invention provides a microscope slide as described above wherein, wherein said markable region (2) is machine readable.

The invention provides a microscope slide as described above wherein the coating comprises a layer of pigmented epoxy resinous material.

The invention provides a microscope slide as described above wherein the coating comprises a copper mixed metal oxide pigment, preferably copper molybdenum tetra oxide.

In a second aspect, the invention relates to a stack of two or more microscope slides according to the invention. The coating thickness is minimal so that friction and/or abrasion between slides in a stack is reduced. This results in a reduced number of slides that are scratched, have faded or damaged markings. This is advantageous for use in highly demanding environments such as hospitals or laboratories, where traceability and sample processing capacity are of the utmost importance.

In a further aspect, the invention relates to the use of a microscope slide or stack of microscope slides according to the invention for laboratory/sample and/or patient identification. Slides according to the invention have an increased capacity for carrying information. This is useful when different sets of data need to be marked on a slide or stack of slides, such as the identification of a lab, patient and/or sample.

In a final aspect, the invention relates to a method for the preparation of a microscope slide, comprising the steps of claim 12.

In a preferred embodiment the invention provides a method as described above, whereby step a) is executed by tampon printing.

With the insight to better show the characteristics of the invention, some preferred embodiments and examples are described hereafter referring to the enclosed figures.

### FIGURE LEGEND

**FIG. 1** shows a front view of a microscope slide with an identification zone 1 comprising a markable region 2.
**FIG. 2** shows a front view of a microscope slide with a markable region 2 smaller than the size of the identification zone and a visual tag 3.
**FIG. 3** shows a front view of a microscope slide comprising text and a bar code 4 in the markable region 2.
**FIG. 4** shows a front view of a microscope slide with machine readable information 5 and an additional identifier 6.
**FIG. 5** is a perspective view of an apparatus and method for marking microscope slides with a diode-laser.

### DETAILED DESCRIPTION OF THE INVENTION

A microscope slide is well known in the art and typically includes a transparent plate, for instance made of soda lime glass, borosilicate glass or transparent plastic. Suitable transparent plastics are crystal-clear polystyrene or UV-transmittable acrylic resin.

Said transparent plate of a microscope slide has an upper surface, a lower surface and an elongated, rectangular shape defined by ends A and B and sides C and D. Typically a microscope slide is 75-76 mm long, 25-26 mm wide and 1.1 mm thick. The edges of a microscope slide may be rounded.

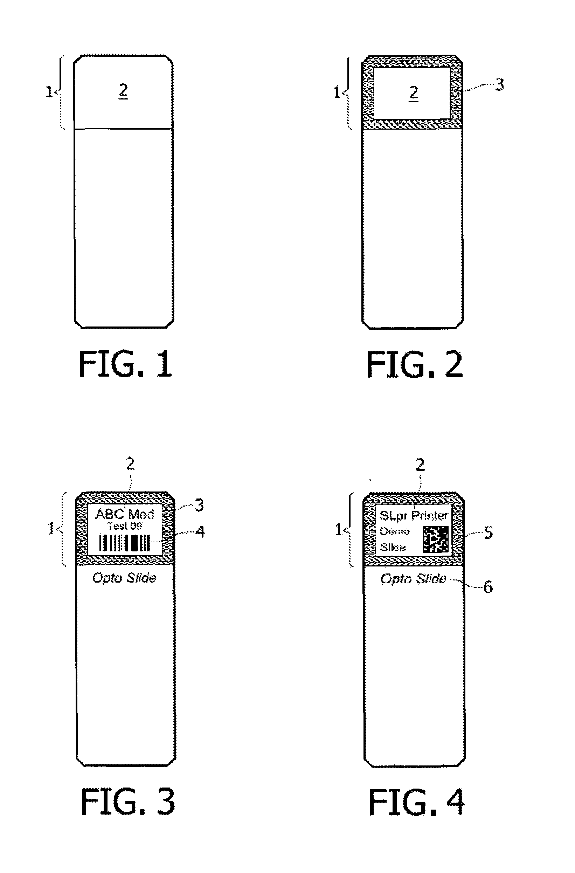

For marking purposes, a microscope slide has an identification zone 1 comprising a markable region 2 (e.g. Fig. 1). Said identification zone 1 is typically located on the upper surface at one end, such as end A of the plate. Said identification zone typically has a surface area of 25 mm x 19-20 mm. The identification zone may be frosted.

Said markable region 2 may cover the entire surface of said identification zone, or part of it. Preferably the markable region is located only where markings are to be applied, hence in part of the identification zone 1. In a preferred embodiment, the markable region 2 covers a surface which is at least 30% smaller that the surface area of the identification zone 1 on one surface of said microscope slide. Typically, the marking region covers a surface area of 20 mm x 13 mm, which represents 55% of the surface area of the identification zone (25 mm x 19 mm) on one side of a standard microscope slide (25 mm x 75 mm). The limitation of the marking region to part of the identification zone has for effect that material consumption is kept to a minimum, leading to a reduction in costs.

The markable region 2 may be constructed of a variety of materials and in a number of ways. Typically the markable region 2 comprises a coating. A coating in this context means a composition which solidified on application to said plate. Said coating may be applied on a plate by conventional means. It may involve cross-linking or polymerization of a carrier and/or loss of a solvent.

Said carrier may be water-based or organic solvent-based or solvent-free. The carrier may have the form of a solution or of a suspension or emulsion. The carrier may be polymeric or non-polymeric, or may comprise polymer precursors in the form or monomers or oligomers that polymerize during the drying process. In a preferred embodiment, said carrier is a resinous material. This improves scratch-resistance of the markable region 2.

Said carrier may include polyurethane, polyvinyl butyral, polyester resins, polyamides, polyimides, epoxy resins, epoxy/vinyl/polyester coatings and lacquers, polyvinylalcohol, polyvinyl acetate, acetal and siloxane resins. Preferably, the carrier is polyurethane or an epoxy resin.

The carrier will generally be dissolved or dispersed in a solvent. Suitable solvents include those that are commonly used for inks and lacquers, such as water, ethanol, ethyl acetate, isopropyl alcohol and lower hydrocarbons.

In a preferred embodiment, said markable region 2 comprises a coating which is sensitive to electromagnetic radiation that changes colour permanently on exposure to electromagnetic radiation. With the term "sensitive to electromagnetic radiation" it is meant that the appearance of the coating changes following electromagnetic radiation. With the term "changes color permanently on exposure" it is meant that a color change is irreversibly effected in the coating; that is without removal of coating material such as e.g. by laser ablation, or carbonization. This has for advantage that contamination of a microscope slide or a sample on a microscope slide is avoided. It also has the advantage that surface modifications such as the formation of craters or edges or foamed parts, are reduced.

In a preferred embodiment, said coating and said markable region are resistant to laboratory solvents, reagents, stains and chemicals, which may remove, blur or obscure critical information on slides.

The laser is a diode laser, such as a direct diode or diode pumped laser. Diode-lasers have a rugged structure, small size, high efficiency. They consume considerably less electric energy as direct pumping is by low-power electric current. The output of a diode-laser can be modulated by direct modulation of a pumping current at rates exceeding 1 kHz. This modulation at high velocity is beneficial for a marking process of a barcode, for instance. Its output beam dimensions are compatible with those of optical fibers. Consequently, there is no requirement for perpendicular placement of the laser to a sample processing line. Hence, equipment can be made more compact. As diode-lasers are less expensive than high powered lasers, investment costs can be reduced. The equipment becomes more affordable to smaller laboratories.

In a preferred embodiment, a diode laser delivers a low amount of power. Typically, the amount of power for the invention ranges from 0.1 to 25 watt. In a preferred embodiment, the amount of power ranges from 1 to 10 watt, preferably between 5 and 9 watt. The use of a low power laser has the effect that brittle surfaces, such as glass, can be marked without fracturing.

Light emitted from a diode laser typically has a wavelength in the range of 800-2500 nm.
A diode laser with a wavelength of 915 nm is used. Diode lasers are well-known in the art and commercially available.

In a preferred embodiment, a diode laser is used at a wavelength relative to the chemical composition of a pigment. In a preferred embodiment a wavelength emitted by a diode laser corresponds to an excitation wavelength of a pigment resulting in a visible marking. The inventors have found that adjusting the laser wavelength to the characteristics of the pigment, whereby an emission wavelength of the laser matches an excitation wavelength of the pigment, a visible and permanent colour change results. A color change in the pigment is triggered with the wavelength of the laser. The advantage is minimum heating of a coating and/or carrier such as glass.

The inventors were able to make microscope slide with high quality markings. This was surprising as the use of a low power laser was expected to lead to unmarkable samples or at best to result in unacceptably long marking times, in other words low marking speed, hampering automation of sample identification and handling processes.

Consequently, the invention provides microscope slides with an identification zone (1) comprising a markable region (2) with an electromagnetic radiation-sensitive coating that changes colour permanently on exposure to electromagnetic radiation of a diode-laser.

Said coating may further comprise a complex inorganic color pigment. By the term "complex inorganic color pigment" is meant a composition comprising a mixed metal oxide or an oxyanion of a transition metal. The complex inorganic color pigment comprises copper and may comprise molybdenum, silver, tungsten or vanadium oxide or oxyanion of these transition metals. Preferably the complex inorganic color pigment comprises molybdenum trioxide. More preferably the complex inorganic color pigment comprises copper molybdenum tetra oxide.

It has been found that said colour change may advantageously be obtained with a markable region (2) comprising a complex inorganic color pigment. The complex inorganic color pigment is part of the coating in the markable region (2). Consequently, the invention provides a microscope slide, wherein the coating comprises a complex inorganic color pigment, a copper mixed metal oxide pigment, preferably copper molybdenum tetra oxide.

The complex inorganic color pigment will generally be present in a composition for coating a microscope slide at a level of up to 50% w/v, more preferably up to about 40% w/v, more preferably up to 10% w/v.

It has been found that a change in colour can be obtained in a coating containing a complex inorganic color pigment even at significantly reduced laser power, for instance below 10 watt. The change in colour can be obtained even by low power radiation and at marking speeds above 5 mm/s. The inventors believe that the colour change of the coating is triggered by very localized changes; e.g. by a change in an excitation or oxidation state of a material at the surface of the pigment particles, brought about by laser irradiation. The color of the oxidized metal may be an indication of degree of its surface oxidation. This has for effect that color centers may be generated via mixed metal oxidation state species. Consequently, colors different from black may be obtainable. The inventors were surprised to find that this combination of laser power below 10 watt and a thin coating comprising complex inorganic color pigment worked particularly well. Especially in view of prior art describing that compositions containing a transition metal oxide mark only very poorly, and/or require very high laser power in order for marking to be achieved.

In a preferred embodiment, said coating comprises an epoxy resin and copper molybdenum tetra oxide. This combination was found to work particularly well. The use of an epoxy resin to obtain the present invention is advantageous, as the application of an epoxy coating is routinely used to prepare microscope slides. Hence, a process according to the invention does not require major modifications to standard operating procedures. Advantageously, an epoxy resin may be dried to a matt finish which is absorptive and retentive of marking ink, i.e. it may be marked with a pen and/or ink printer. The selection of an epoxy resin provides resistance to scratching to the markable region.

The coating may further comprise a sensitizer. By the term "sensitizer" it is meant a compound which enhances the sensitivity of the complex inorganic pigment to electromagnetic radiation. Sensitizers are selected from compounds able to absorb heat, compounds that are reflective, compounds having free or conjugated electron pairs. Compounds able to absorb heat may be selected from compounds comprising carbon black, graphite, kaolin, talc, mineral oil, a sugar. Sugars that may be used include glucose, sucrose, galactose, maltose and fructose. A compound that is reflective may be selected from compounds comprising calcium silicate, zirconium silicate, zeolite, mica. A compound having a free electron pair may be selected from compounds comprising an amine or amino acid. Amines which may be incorporated into the coating include alkyl, aryl, cycloaliphatic, and heterocyclic amines, as well as amino sugars and polymeric salts or compounds of amines. Amino acids which may be incorporated into the coating include alpha-amino acids, especially alpha-amino acids that contain one or more additional amine groups, peptides and polypeptides including proteins. Examples of amino acids that are advantageous include arginine and lysine. Where a sensitizer is used in a composition to obtain a coating of the invention, it preferably coats the complex inorganic color pigment. As some of the sensitizers are prone to blackening, darker and/or larger markings may result. This has the advantage that contrast can be increased further. Preferably, said sensitizer is present in the form of amine.

The complex inorganic color pigment has a particle size of less than 5 µm, preferably less than 3 µm, preferably less than 1.5 µm. As the inorganic color pigment was found to be very sensitive, a color change can be rapidly obtained. A decrease of the power of a laser has the advantage that the color change is restricted to the pigment particle and the immediate surroundings. This has for effect that markings with improved contrast can be achieved. This has for effect that more information can be printed on a limited space such as the identification zone of a microscope slide. The identification zone typically has a size of 18 x 12 cm². In a preferred embodiment the resolution of an imaged mark is above 125 dots per cm.

It was found that coatings with reduced thickness may be used. This is advantageous particularly for coating containing expensive complex inorganic color pigment. This leads to savings through less material use. The coating has a thickness between 5-100 µm, preferably between 10-40 µm, preferably around 25 µm.

In a preferred embodiment, a microscope slide includes human-readable and/or machine-readable indicia. The human-readable indicia may be one or more numerals, letters, symbols, designs, characters or any combination thereof capable of being discerned by the human eye. The machine-readable indicia may comprise an identification bar code 4 or any other configuration of marks, symbols or characters capable of being read or scanned by machine 5 (e.g. identification bar code). An example is depicted in Fig. 3 and 4.

In a preferred embodiment, the markable region 2 is machine readable. The indicia may be located in the markable region such that space is left in the markable region for the inscription of hand-written information. In this manner, hand-written information may be used with machine-read information from the machine-readable indicia and the human-readable indicia for identity verification of the microscope slide.

In a preferred embodiment, the markable region comprises a polymeric material, preferably a resinous material, which is absorptive and retentive of dies and/or pigments. This has for effect that colorants in the form of dies and pigments are easily mixable with the polymeric material. This is advantageous for their application to a markable region of a microscope slide.

The identification zone may further contain a dye and/or pigment to provide color to the coating or part of the coating in addition and prior to laser marking. The color can be selected from a range of colors in a color-coding scheme.

In a preferred embodiment, a microscope slide of the invention has an identification zone further comprising a visual tag. A visual tag may be colored text, or a colored region.

In a more preferred embodiment, the visual tag is a colored or patterned area. The use of color in the markable region may be used for classification purposes in addition to the information obtained from marking a microscope slide of the invention. Improved sample traceability can be achieved. The color may be different from the color of the markable region.

In a preferred embodiment the visual tag 3 is adjacent to the markable region.

In a more preferred embodiment, the visual tag 3 is disposed around the perimeter of said markable region 2, as displayed in Fig. 2

In another embodiment, a microscope slide may further comprise an additional identifier 6. Preferably the additional identifier is located underneath a markable region 2 as depicted in Fig. 4. Alternatively, the additional identifier is situated on the upper surface of the microscope slide at end B opposite to end A with the identification zone. In another embodiment, the visual tag is situated parallel to a long side of a transparent plate, preferably in the middle of the long side, positioned with a spacing of at least 1 mm from side C and/or D.

Microscope slides could be produced, wherein an electromagnetic radiation-marked area of the markable region (2) visually contrasts with the non-marked area of the markable region (2). By "visually contrasts" is meant that the marked and non-marked area can be visually distinguished. Hence, it can be visually observed where the markable region (2) is located. A visually contrasting region is advantageous for readability.

In a further aspect, the invention provides a stack of microscope slides according to the invention.

A microscope slide or stack of microscope slides according to the invention can be advantageously used for laboratory/sample and/or patient identification. Consequently the invention provides the use of a microscope slide or stack of microscope slides for laboratory/sample and/or patient identification.

The invention further provides a method for the preparation of a diode-laser markable microscope slide.

Preparation of the marking material, in liquid form, may occur through low shear mechanical mixing, high shear mechanical mixing, ultrasonic mixing and/or milling. The marking material, in liquid form, can be manually or automatically applied to the substrate surface at the desired thickness by: 1) hand-painting it onto the surface; 2) mechanically brushing or rolling it onto the surface; 3) spraying it onto the surface; 4) tampon or screen printing it onto the surface.

The marking material may be applied to the surface of a microscope slide, either directly or indirectly. Indirect application may comprise that the marking material in solid form is brought in contact with the substrate surface at the desired thickness by: a) pressure sensitive, slightly self-adhesive label; or b) non-adhesive tape pressed against the substrate surface by a mechanical apparatus.

In a preferred embodiment, the preparation of a diode-laser markable slide comprises the application of an electromagnetic radiation sensitive-coating on a microscope slide with a tampon printer. Using a tampon printer, a microscope slide with the appropriate coating including visual tag is made available "just-in-time", so that different microscope slides with appropriate visual tags such as one or more colored areas can be printed, within a very short time.

Several different methods are suitable for laser marking, for example: a) the masking method in which radiant energy passes through a fixed, data specific mask and impinges onto the marking material to produce the desired mark; b) dot-matrix method whereby the radiant energy passes through a computer controlled, changeable data, dot-matrix mask and impinges onto the marking material to produce the desired mark; c) beam deflection method whereby the radiant energy passes through a beam steering head and impinges onto the marking material to produce the desired mark; d) X-Y plotter method whereby the radiant energy moves on a gantry type X-Y mechanism utilizing mirrors and/or fiber-optics and impinges onto the marking material to produce the desired mark: e) part moving method whereby the radiant energy is in the form of a stationary beam which impinges onto a work-piece to be marked which is moved using an X-Y motor driven stage; and f) the area irradiation method whereby the data specific marking area is irradiated by means of a beam steering mechanism or by means of moving the work-piece under a stationary beam. In these methods, the laser is preferably combined with a laser marking system so that the marking material can be irradiated with any, e.g. computer programmed, digits, letters, and special symbols where the laser beam strikes the marking material in the most efficient manner possible.

The marking of the coating is achieved by irradiating the coating with a diode-laser. This type of laser is relatively inexpensive, robust and reliable. In a more preferred embodiment, the marking of the coating is achieved by a combination of beam deflection and part moving methods: for instance a mirror deflects the laser beam to generate line (x-axis) and a mechanical movement of the slide generates the lateral movement (y-axis); or vice versa. A method according to the invention has for effect that, a single laser beam pass is sufficient to obtain high quality marking on a microscope slide of the invention.

In a preferred embodiment, a radiant energy beam from a diode-laser having an energy level between 1 and 25 watt, a spot size ranging between 5 and 250 µm and a marking speed along the substrate ranging between 3 and 12 mm/s are used.

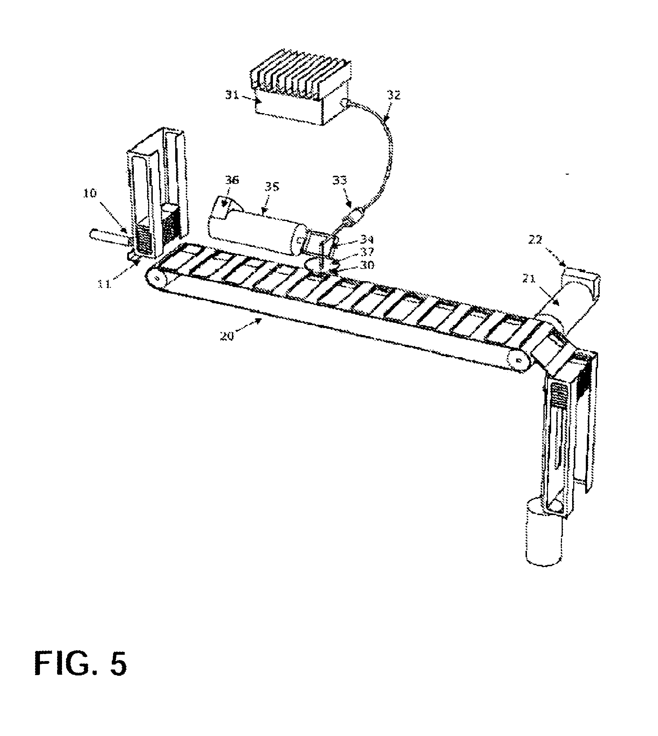

Fig. 5 depicts the laser marking process of a microscope slide according to the invention. The laser module depicted in Figure 5 is a diode-laser.

The microscope slide was a conventional, commercially available microscope slide including a transparent plate made of soda lime glass. It may be made from any other type of slide having at least one coating or layer for a marking surface. Microscope slides were stacked in a microscope slide dispenser 10 that fed a stack of microscope slides 11 on a conveyer belt 20. The conveyer belt 20 was driven by a motor 21 and its position was controlled by a positioning sensor 22. The microscope slides on the conveyer belt passed through a laser marking system 30 where a laser module 31 produced a laser beam that was sent via an optical fiber 32 through an optical collimator onto an oscillating mirror 34. The mirror 34 could be tilted around its axis using an oscillating device 35 and the position of the mirror was controlled by a positioning sensor 36. The mirror 34 deflected a laser beam through a focusing optic 37. After processing the slides were recuperated in a slide stacker 61 and slide lifting device 62.

A central unit received information from an input device such as a barcode scanner. The information is transmitted to several drivers (laser driver, conveyer driver, mirror driver) for steering the marking process of a slide with the energy irradiating from the diode-laser.

Although the present invention has been described with reference to preferred embodiments, numerous modifications and variations can be made. No limitation with respect to the specific embodiments disclosed herein is intended or should be inferred.

### EXAMPLE

Complex inorganic color pigment, specifically molybdenum tetra oxide (CAS number 13767-34-5), particle size 1.5 µm (D50), commercially available from Tomatec, was added to epoxy resin. Low shear mechanical mixing was applied.

The coating composition prepared had the following composition:
Epoxy resin: 26.5 % w/v
Complex inorganic color pigment: 30 % w/v
Solvent: remainder

An ink reservoir of a tampon printer was loaded with the coating composition. The coating composition was tampon printed on a microscope slide. After drying the coating had a thickness of about 25 µm. The coated slides were exposed to the diode-laser at 915 nm for 6 seconds. 8 Watt laser power was delivered. A marking speed of 6 mm/s was used. An image was observed. Individual marks had an average width of approximately 200 µm and a maximum width of approximately 250 µm. A good black mark was obtained. Damaging or foaming of the coating was not observed. The use of the laser markable slides as prepared in this example in automated equipment allowed a processing capacity of 100 slides per hour.

## Claims

1. Microscope slide provided with an identification zone (1) comprising a markable region (2) with an electromagnetic radiation-sensitive coating that changes color permanently without removal of coating material on exposure to electromagnetic radiation of a diode-laser with a wavelength of 915 nm; whereby said coating has a thickness between 5-100 µm, preferably between 10-40 µm, and said coating comprises a layer of pigmented epoxy resinous material and a copper mixed metal oxide pigment with a particle size less than 5 µm.

2. Microscope slide according to claim 1, wherein said coating comprises an epoxy resin and copper molybdenum tetra oxide.

3. Microscope slide according to any of the above claims, wherein an electromagnetic radiation-marked area of the markable region (2) visually contrasts with the non-marked area of the markable region (2).

4. Microscope slide according to any of the above claims, wherein said identification zone (1) further comprises a visual tag (3).

5. Microscope slide according to any of the above claims, wherein the visual tag (3) is a colored or patterned area.

6. Microscope slide according to any of the above claims, wherein said visual tag (3) is adjacent to said markable region (2).

7. Microscope slide according to any of the above claims, wherein said visual tag (3) is disposed around the perimeter of said markable region (2).

8. Microscope slide according to any of the above claims, wherein said markable region (2) covers a surface which is at least 30% smaller than the surface area of the identification zone (1) on one side of said microscope slide.

9. Microscope slide according to any of the above claims, wherein said markable region (2) includes machine readable indicia.

10. Stack of microscope slides, wherein said stack comprises two or more microscope slides according to any of the above claims.

11. Use of a microscope slide or stack of microscope slides according to any of the above claims for laboratory/sample and/or patient identification.

12. Method for the preparation of a microscope slide, comprising the steps of:
a) applying an electromagnetic radiation sensitive-coating on the microscope slide whereby said coating has a thickness between 5-100 µm preferably between 10-40 µm and said coating comprises a layer of pigmented epoxy resinous material and a copper mixed metal oxide pigment with a particle size less than 5 µm; and
b) marking said coating with a diode-laser with a wavelength of 915 nm.

13. Method according to claim 12, whereby step a) is executed by tampon printing.

## Patentansprüche

1. Ein Mikroskop Objektträger mit einem Kennfeld (1) versehen, umfassend ein markierbaren Bereich (2) mit einer elektromagnetischen strahlungsempfindlichen Beschichtung, dessen Farbe sich ohne Entfernung des Beschichtungsmaterials unter Einwirkung einer elektromagnetischer Strahlung eines Diodenlasers mit einer Wellenlänge von 915nm, dauerhaft verändert; wobei die besagte Beschichtung eine Dicke zwischen 5 und 100 µm besitzt, vorzugsweise zwischen 10 und 40 µm, und die besagte Beschichtung eine Schicht umfasst aus pigmentiertem Epoxidharz und einem Kupfer Mischmetalloxid Pigment mit einer Teilchengröße von weniger als 5 µm.

2. Ein Mikroskop Objektträger gemäß Anspruch 1, wobei die besagte Beschichtung ein Epoxidharz und Kupfer-Molybdän-tetra-oxid umfasst.

3. Ein Mikroskop Objektträger gemäß einem der obigen Ansprüche, wobei ein elektromagnetischer strahlungsmarkierter Bereich des markierbaren Bereichs (2) optisch mit dem nicht-markierten Bereich des markierbaren Bereichs (2), kontrastiert

4. Ein Mikroskop Objektträger gemäß einem der obigen Ansprüche, wobei das Kennfeld (1) ferner eine visuelle Markierung (3) umfasst.

5. Ein Mikroskop Objektträger gemäß einem der obigen Ansprüche, wobei die visuelle Markierung (3) ein farbiges oder gemustertes Bereich ist.

6. Ein Mikroskop Objektträger gemäß einem der obigen Ansprüche, wobei die visuelle Markierung (3), dem markierbaren Bereich (2) angrenzend ist.

7. Ein Mikroskop Objektträger gemäß einem der obigen Ansprüche, wobei die visuelle Markierung (3) ringsum dem Umfang des markierbaren Bereiches (2) angeordnet ist.

8. Ein Mikroskop Objektträger gemäß einem der obigen Ansprüche, wobei der markierbare Bereich (2) eine Fläche deckt, die mindestens 30% geringer ist als die Fläche des Kennfelds (1) an einer Seite des besagten Mikroskop Objektträgers.

9. Ein Mikroskop Objektträger nach einem der obigen Ansprüche, wobei der markierbare Bereich (2) maschinenlesbare Indizien enthält.

10. Ein Stapel von Mikroskop Objektträgern, wobei der besagte Stapel zwei oder mehr Objektträger nach einem der obigen Ansprüche umfasst.

11. Die Verwendung eines Mikroskop Objektträgers oder eines Objektträgerstapels nach einem der obigen Ansprüche für Labor-, Probe- und/oder Patientenidentifizierung.

12. Ein Verfahren zur Herstellung eines Mikroskop Objektträgers, folgende Schritte umfassend:
a) die Auftragung einer elektromagnetischen strahlungsempfindlichen Beschichtung auf den Mikroskop Objektträger, wobei die Beschichtung eine Dicke zwischen 5 und 100 µm besitzt, vorzugsweise zwischen 10 und 40 µm, und die besagte Beschichtung einer Schicht aus einem pigmentiertem Epoxidharz und einem Kupfer Mischmetalloxid Pigment mit einer Teilchengröße von weniger als 5 µm, umfasst, und
b) die Markierung der besagten Beschichtung mittels eines Diodenlasers mit einer Wellenlänge von 915 nm.

13. Ein Verfahren gemäß Anspruch 12, wobei Schritt a) durch einen Tampondruck ausgeführt wird.

## Revendications

1. Une lame de microscope pourvue d'une zone d'identification (1) comprenant une zone marquable (2) avec un revêtement sensible au rayonnement électromagnétique qui change de couleur en permanence sans enlèvement du matériau de revêtement par l'exposition à un rayonnement électromagnétique d'une diode laser avec une longueur d'onde de 915 nm, de sorte que ledit revêtement a une épaisseur comprise entre 5-100 µm, de préférence entre 10-40 µm, et ledit revêtement comprend une couche de matière résineuse pigmentée époxy et un pigment d'oxyde métallique mélangé avec du cuivre, ayant une granulométrie inférieure à 5 µm.

2. Une lame de microscope selon la revendication 1, dans laquelle ledit revêtement comprend une résine époxy et du tétra oxyde de molybdène et cuivre.

3. Une lame de microscope selon l'une quelconque des revendications précédentes, dans laquelle une zone marquée par rayonnement électromagnétique de la zone marquable(2), contraste visuellement avec la zone non marquée de la zone marquable(2).

4. Une lame de microscope selon l'une quelconque des revendications précédentes, dans laquelle ladite zone d'identification (1) comprend en outre un marqueur visuel (3).

5. Une lame de microscope selon l'une quelconque des revendications précédentes, dans laquelle le marqueur visuel (3) est une zone de couleur ou une zone avec un motif.

6. Une lame de microscope selon l'une quelconque des revendications précédentes, dans laquelle ledit marqueur visuel (3) est adjacent à ladite zone marquable(2).

7. Une lame de microscope selon l'une quelconque des revendications précédentes, dans laquelle ledit marqueur visuel (3) est disposé autour du périmètre de ladite zone marquable(2).

8. Une lame de microscope selon l'une quelconque des revendications précédentes, dans laquelle ladite zone marquable(2) recouvre une surface qui est au moins 30% inférieure à la surface de la zone d'identification (1) sur l'un des côtés de ladite lame de microscope.

9. Une lame de microscope selon l'une quelconque des revendications précédentes, dans laquelle ladite zone marquable(2) comprend des indices lisibles à l'aide d'une machine.

10. Une pile de lames de microscope, ladite pile comprenad deux lames de microscope ou plus, selon l'une quelconque des revendications précédentes.

11. Utilisation d'une lame de microscope ou d'une pile de lames de microscope selon l'une quelconque des revendications précédentes pour l'identification de laboratoires/échantillons et/ou patients.

12. Procédé pour la préparation d'une lame de microscope, comprenant les étapes suivantes :
a) application d'un revêtement sensible au rayonnement électromagnétique sur la lame de microscope, de sorte que ledit revêtement ait une épaisseur comprise entre 5-100 µm, de préférence entre 10-40 µm, et ledit revêtement comprend une couche de matière résineuse pigmentée époxy et un pigment d'oxyde métallique mélangé avec du cuivre, ayant une granulométrie inférieure à 5 µm, et
b) marquage dudit revêtement avec une diode laser avec une longueur d'onde de 915 nm.

13. Procédé selon la revendication 12, dans lequel l'étape a) est exécutée à l'aide d'une impression au tampon.
